# EUROPEAN PATENT SPECIFICATION

(11) **EP 0 619 950 B1**
(45) Date of publication and mention of the grant of the patent: **28.10.1998**
(21) Application number: 94101731.1
(22) Date of filing: 04.02.1994
(51) Int. Cl.: A23J 1/12, A23J 3/34, A23L 1/105, A23L 1/305, A23L 2/38

(54) **Oat fractionation process and product thereof**
Haferfraktionierungsverfahren und Produkt daraus
Procédé de fractionnement d'avoine et produit en dérivé

(30) Priority: 09.02.1993 US 15494
(43) Date of publication of application: 19.10.1994
(73) Proprietor: THE QUAKER OATS COMPANY, Barrington Illinois 60010 (US)
(72) Inventor: Lenz, Marvin K., Algonquin, Illinois 60102 (US); Paisley, Steven D., Fox River Grove, Illinois 60021 (US)
(74) Representative: Baillie, Iain Cameron

(56) References cited:
- EP-A- 0 112 080
- EP-A- 0 407 981
- WO-A-89/01294
- DE-A- 2 032 490
- FR-A- 2 406 665
- JOURNAL OF AGRICULTURAL AND FOOD CHEMISTRY, vol.36, no.1, 1988, WASHINGTON D.C. pages 26 - 31 W.D. DEESLIE, M. CHERYAN 'FUNCTIONAL PROPERTIES OF SOY PROTEIN HYDROLYSATES FROM A CONTINUOUS ULTRAFILTRATION REACTOR'
- JOURNAL OF AGRICULTURAL AND FOOD CHEMISTRY, vol.40, 1992, WASHINGTON D.C. pages 1972 - 1976 K. LIUKKONEN ET AL 'IMPROVEMENT OF LIPID STABILITY IN OAT PRODUCTS BY ALKALINE WET-PROCESSING CONDITIONS'
- JOURNAL OF FOOD SCIENCE, vol.45, no.5, 1980, CHICAGO, ILL. pages 1383 - 1386 Y.V. WU, A.C. STRINGFELLOW 'PROTEIN ISOLATE FROM ALKALINE EXTRACTION OF AIR-CLASSIFIED HIGH-PROTEIN SOFT WHEAT FLOUR'

## Description

The present invention relates to a process for preparing a low fat, transparent, stable oat protein containing aqueous solution. The present invention also relates to the aqueous solution product of this process and a solid, purified oat protein containing mixture which when placed in solution provides for a transparent, stable oat protein containing aqueous solution.

### BACKGROUND OF INVENTION

The oat seed from which the oat grain is taken comprises an oat hull and an oat groat. The oat hull serves as an outer covering of the groat. The oat groat is comprised of oat bran, including the pericarp and the aleurone layers, germ and endosperm. It is desirable to fractionate the oat groat into its soluble and insoluble fractions because each fraction of the groat has value in and of itself. Specifically of interest in the present invention is the water soluble fraction of the groat, including its water soluble oat protein fraction. The soluble oat protein fraction has many beneficial uses, including use in cosmetics; hair care and skin care formulations such as lotions, shampoos, creams and gels; ready-to-eat cereal products to enhance their flavor and texture; and in preparing meals for controlled diets such as restricted hospital meals, infant formula, and special nutritional formulations such as high protein beverages.

Furthermore, oat protein has a higher nutritional value than other cereal proteins because of its larger and more balanced concentration of essential amino acids. Amino acids are essential to human life because they are the basic materials for forming the required protein. If the oat protein is isolatable, one has a suitable material for adding protein content to a variety of foods or forming a desirable protein component.

Also of interest are low fat, oat protein containing aqueous solutions and solid mixtures used to prepare aqueous solutions. These are useful as additives and protein supplements in low fat food items. Additionally, it is believed that such low fat oat protein containing compositions and mixtures will be more stable since they are likely less susceptible to rancidity. This is because they contain less fat for oxidation, which is the cause of rancidity. Unfortunately, such low fat oat protein containing compositions are also translucent, and therefore are not aesthetically pleasing when added to clear formulations such as beverages.

Furthermore, low fat, oat protein containing solutions have a greater concentration of protein as compared to full fat formulations. This translates into a greater protein yield, and the corresponding economy of efficient operation.

Given the foregoing, it would be desirable to prepare a transparent oat protein containing aqueous solution and solid mixture which is transparent when in solution, and which can be used in clear cosmetic and hair and skin care formulations. It would also be desirable if such aqueous solution and solid mixture fraction were low in fat as well. However, to date the known processes for preparing oat protein containing aqueous compositions and solid mixtures produce products which are not clear, and therefore cannot be used in such applications.

Given these benefits, it would be desirable to prepare a water soluble oat protein fraction, as well as an aqueous solution containing such a fraction. However, oat protein fractions are typically unstable, in that they tend to precipitate out of suspension when in an aqueous environment. Furthermore, even when they are relatively stable, the oat protein fractions and aqueous compositions containing such fractions are prepared by methods which are undesirable and produce products which are undesirable. Specifically, the oat protein fractions, aqueous compositions containing such fractions, and processes for preparing such fractions and compositions which are taught tend to produce a protein which is substantially insoluble when dried; have to be processed over an excessive length of time, which allows for the growth of undesirable microbes which can contaminate the final product; and/or form translucent suspensions, which limits their use somewhat. Therefore, it is desirable to obtain a soluble oat protein fraction which is stable, which can preferably be prepared by a method that is not excessively time consuming, and which provides for a transparent aqueous solution when in solution, which allows for greater use of the product.

The present invention provides a low fat, transparent, stable oat protein containing solution, a low fat, solid stable oat protein containing mixture which provides a transparent aqueous solution upon rehydration, and a process for the preparation of such aqueous solution and solid mixture.

The present invention provides such products, as well as a process for their preparation.

### BACKGROUND ART

The art discloses oat fractionation processes and products of these processes.

U.S. Patent 4,028,468, issued June 7, 1977 to Hohner et al., discloses a process for fractionating oats comprising grinding dried, dehulled oat groats to form an oat flour containing a dense, fine fraction of regularly shaped particles and a light, coarse fraction of irregularly shaped particles, wherein the coarse fraction comprises oat bran, oat gum, oat protein and oat starch. The flour is recovered and the coarse and fine fractions are separated. The coarse fraction is then recovered and a heated, basic slurry containing the recovered coarse fraction is prepared. The heated, basic slurry is agitated to carry out an extraction and to form a bran fraction and a soluble fraction containing the oat gum, the oat protein and the oat starch. The oat bran is then recovered from the slurry while leaving the oat gum, the oat protein and the oat starch in the soluble fraction, thereby forming an alkaline extract of the soluble fraction. The alkaline extract is then chilled to a temperature in the range from above the freezing point of the alkaline extract to ambient temperature. The alkaline extract is chilled to form a precipitate of oat protein, which is removed along with the starch from the extract to form a supernatant liquid containing the oat gum to thereby recover the protein precipitate and the starch. The supernatant liquid is neutralized and heated to at least 90°C, after which the oat gum is recovered.

U.S. Patent 4,448,790, issued May 15, 1984 to Sarkki et al., discloses a process for fractioning grain flour into at least three fractions of food quality including starch, protein and sugar fractions. The claimed process comprises slurrying grain flour into water; separating the resulting slurry into a heavier fraction containing ordinary grain starch and having a larger particle size and a lighter fraction containing about 15 to 40% of the dry substance of the flour which contains protein covered small particle starch; heating the lighter fraction to a temperature of at least 120°C for a period of time sufficient for the protein network on the surface of the small particle starch to split and the starch to be gelatinized; cooling the lighter fraction to a temperature of 90°C or lower and treating said lighter fraction simultaneously with alpha-amylase and beta-glucanase; separating the resulting protein precipitate from the lighter fraction as a precipitate to obtain a clear fraction remaining after separating the precipitate; and saccharifying the clear fraction with amyloglucosidase or fungal amylase at a temperature of 55°C or lower until the dextrose equivalent is at least 20 to 80.

U.S. Patent 4,377,602, issued March 22, 1983 to Conrad, discloses a process for the preparation of a hydrolyzed protein and starch product from whole grain and a product of the process. In the disclosed process in situ, enzymatically hydrolyzed protein and starch products are prepared from whole grain, said process comprising crushing whole grain and thereafter subjecting the crushed grain to a treatment which consists essentially of the following steps: subjecting said grain to an enzymatic treatment in an aqueous medium with an endopeptidase so as to transform substantially all water-insoluble proteins present in the grain to water-soluble protein products, which thereafter are filtered and recovered from the crushed grain as a clear filtrate containing protein products containing peptides and amino acid residues; and subjecting the remaining crushed grain to an enzymatic treatment in an aqueous medium with alpha-amylase followed sequentially by an amyloglucosidase, both enzymes being substantially free from other carbohydrate hydrolyzing enzymes so as to transform substantially all the water-insoluble starch fraction in the grain to water-soluble, degraded products of starch, wherein the amyloglucosidase is at a pH of between 4 to 4.5, so as to transform substantially all the water-insoluble starch fractions in the grain to glucose.

U.S. Patent 4,282,319, issued August 4, 1981 to Conrad, discloses a process for the preparation of a hydrolyzed protein and starch product from whole grain and a product of the process. In the disclosed process in situ, enzymatically hydrolyzed protein and starch products are prepared from whole grain, said process comprising crushing whole grain and thereafter subjecting the crushed grain to a treatment which consists essentially of the following steps: subjecting said grain to an enzymatic treatment in an aqueous medium with an endopeptidase so as to transform substantially all water-insoluble proteins present in the grain to water-soluble protein products, which thereafter are filtered and recovered from the crushed grain as a clear filtrate containing protein products containing peptides and amino acid residues; and subjecting the remaining crushed grain to an enzymatic treatment in an aqueous medium with at least one starch hydrolyzing enzyme so as to transform substantially all of the water-insoluble starch fraction in the grain to water-soluble, degraded products of starch, and wherein the starch hydrolyzing enzyme is amylase substantially free from other carbohydrate hydrolyzing enzymes.

The papers "Functional Properties of Oat Concentrate Treated With Linoleate or Trypsin", C. Ma, J. Inst. Can. Sci. Technol. Aliment., Vol. 18, No 1, pp. 79-84 (1985), and "Functional Properties of Oat Proteins Modified by Acylation, Trypsin Hydrolysis or Linoleate Treatment", C. Ma and D. Wood, JAOCS, Vol. 64, No. 12, pp. 1726-1731 (1987), teach that treating oat protein with the protease trypsin will break down about half of the protein and will result in a protein component having a solubility of between 40-60% within the pH range of 3-8. These papers do not teach how to make a protein that is completely stable against precipitation and insolubility. Furthermore, the dry powder prepared by the disclosed process is at most 60% soluble in the pH range of 3.5-8.0.

The paper "Some Functional and Nutritional Properties of Oat Flours as Affected by Proteolysis", R. Ponnampalam, G. Goulet, J. Amiot and G. Brisson, J. Agric. Food Chem., Vol. 35, No. 2, pp. 279-285 (1987), teaches a flour product having a nitrogen protein solubility of 50% maximum.

The paper "Enzymic Solubilization of Cereal Proteins by Commercial Proteases", C. Nkonge and C. Balance, Cereal Chem., Vol. 61, No. 4, pp. 316-320 (1984), teaches a method for obtaining an oat substrate having a nitrogen solubility of 90%. This paper discloses preparing aqueous slurries separately containing different varieties of grains, including oats. These slurries are rendered basic by the addition of base. The aqueous, basic slurry is also treated with certain protease enzymes for a period of approximately 12 hours. This provides for the recovery of a soluble fraction of the grain from an insoluble fraction. In the case of the oat grain, a stable, oat protein containing solution appears to be used by the described process.

The papers: "Oat Protein Concentrate from a Wet Milling Process: Composition and Properties", J. Cluskey, Y. Wu, J. Wall and G. Inglett, Cereal Chem. 50(4), pp. 481-488 (1973); "Protein Isolate from High-Protein Oats: Preparation, Composition and Properties", Y. Wu, K. Sexson, J. Cluskey and G. Inglett, J. Food Sci., Vol. 42, No. 5, pp. 1383-1386 (1977); "Oat Protein Concentrates form a Wet Milling Process: Preparation", J. Cluskey, Y. Wu, J. Wall and G. Inglett, Cereal Chem. 50(4), pp. 481-488 (1973) and U.S. Patent 4,089,848, issues May 16, 1978 to Bell et al.; all teach extracting oat protein from oat products using and alkaline extraction process.

In addition to these processes, oat protein containing products are commercially available. For example, products Oat Cl-40 and Oat Cl-15 are available from Canamino, Inc., 118 Veterinary Road, Saskatoon, SK, Canada. The Oat Cl-40 product is described as a protein derived from oats which has a 40% protein content; is an odorless beige powder; is dispersible in a number of solvents; and increases viscosity when undergoing hydration. The Oat Cl-15 product is described as a protein derived from oats which has a 15% protein content; is an odorless beige powder; is dispersible in a number of solvents; and increases viscosity when undergoing hydration. Both of these products can be used in hair care and skin care formulation such as lotions, shampoos, creams and gels.

The art also teaches that soy protein hydrolysates can be clarified by ultrafiltration to remove turbidity and increase solubility. The paper "Functional Properties of Soy Protein Hydrolysates from a Continuous Ultrafiltration Reactor", J. Agric. Food Chem., Vol. 36, pp. 26-31 (1984) teaches that soy protein hydrolysate fractions produced in a continuous ultrafiltration reactor showed good solubility and clarity at high reactor activity. However, the hydrolysates became in soluble and highly turbid as the pH deviated from pH = 7 during preparation of the hydrolysate and as the processing time increased.

However, the products described above and prepared by the processes described above either lack the stability of the product of the present invention, do not have a high protein concentration, are prepared by time consuming and undesirable preparation methods, or a combination thereof. Most of these describes oat protein fractions are unstable while in solution and will precipitate out of solution if allowed to sit for a period of 1-2 days at cooler conditions. Refrigerating the composition containing the soluble oat protein fraction also causes the fraction to precipitate. For the products that are alleged to be stable, they are prepared in the form of an aqueous composition which is reacted over a period of 12 hours. This is inherently inefficient and can give rise to the growth of microbial organisms, which renders the final product undesirable.

Furthermore, stable aqueous compositions containing such oat fractions are translucent, and are therefore limited in their applications.

As such, it would be desirable to produce a transparent, low fat, stable, soluble oat protein containing aqueous solution, and a soluble oat protein fraction capable of producing such a solution. The present invention provides for such a fraction and solution.

It is therefore an object of the present invention to provide for a transparent, low fat, stable oat protein containing aqueous solution and a dried, solid stable oat protein containing mixture which can be used to prepare a transparent, low fat, stable aqueous solution upon rehydration. It is also an object of the present invention to provide for a method for preparing such solution and mixture.

These and other objects are accomplished by the invention described herein.

Unless otherwise noted, all weight percentages herein are on a dry weight basis.

### SUMMARY OF THE INVENTION

The present invention relates to a process for fractionating oats to obtain a stable, soluble oat protein containing aqueous solution, the process comprising:
a) preparing an aqueous slurry comprising water and an oat substrate;
b) fractionating the oat substrate by maintaining the slurry at a sufficient temperature and treating the slurry with sufficient agitation, sufficient base or acid to adjust the pH of the aqueous slurry to outside the isoelectric range, and sufficient protease to hydrolyze sufficient oat protein, thereby obtaining a translucent slurry which comprises an insoluble solid fraction, an insoluble liquid fraction, a stable, soluble oat protein fraction, a soluble oat fat fraction, and a soluble oat carbohydrate fraction; and
c) removing the insoluble liquid fraction and the insoluble solid fraction from the slurry, thereby recovering a final transparent, low fat, stable aqueous solution comprising water and a stable, soluble oat protein fraction, a soluble oat fat fraction, and a soluble oat carbohydrate fraction.

The present invention further comprises the product of the above process.

The present invention further comprises a solid, soluble oat protein containing mixture in purified form.

### DETAILED DESCRIPTION OF THE INVENTION

In the process of the present invention, an aqueous slurry is initially prepared comprising water and an oat substrate. The quantity of oat substrate present in the slurry is dependent upon how viscous it makes the slurry and the efficiency of the separation process. The concentration of oat substrate in the slurry typically ranges from about 1% to about 15%, preferably from about 5% to about 15%, more preferably from about 8% to about 12% by weight, based upon the total weight of the aqueous slurry.

The oat substrate useful in the process of the present invention can be in any form from which a soluble fraction can be recovered, can be defatted, and can be whole or size reduced. Examples of useful oat substrates include both hulled and dehulled whole oats, defatted whole oats, whole rolled oats, sliced oats, defatted sliced oats, oat flour, defatted oat flour, oat bran, defatted oat bran, oat meal, defatted oat meal, fine oat flour, defatted fine oat flour, oat flakes, defatted oat flakes, and mixtures thereof, with oat flour being preferred.

The oat substrate may be size reduced by any method known to those skilled in the art. Processes for size reducing typically utilize abrasion, shear, impact and compression force. Examples of equipment useful for the size reduction accomplished herein include, but are not limited to, grinders, cereal granulators, hammermills, pinmills, roller mills, ball mills, attrition mills, kibblers, air jet mills, and granulators, with hammermills being preferred.

In a more preferred embodiment of the present invention, prior to being combined with water to form the aqueous slurry of the present invention, dehulled oat groats are ground in a hammermill into a flour comprising two general types of particles. A first type of particle is a light, coarse fraction of irregularly shaped particles, preferably having a particle size in the range of from about [500 to 3,000 microns] 0.05 to 0.3 cm. A second type of particle is a dense, fine fraction of regularly shaped particles, preferably having a particle in the range of from about [100 to 500 microns] 0.1 to 0.5 cm. The fine fraction is combined with water to form the aqueous slurry of the present invention. A detailed description of methods of grinding oat groats to obtain these coarse and fine fractions is described in U.S. Patent 4,028,468, the disclosure of which is incorporated herein.

Once the aqueous slurry is prepared, the oat substrate is fractionated. The oat substrate is fractionated by maintaining the slurry at a sufficient temperature, agitating the slurry, adding acid or base to adjust the pH of the slurry to outside the isoelectric range, and treating the slurry with protease. These steps can be in any order, provided that they follow the preparation of the slurry, and are preferably carried out simultaneously.

The slurry is maintained at a temperature and for a period of time sufficient, when combined with agitation and the addition of acid or base, to fractionate the oat substrate. The temperature is maintained at the necessary level by means known to those skilled in the art, typically by heating or cooling, the precise means depending upon factors such as the ambient temperature and necessary slurry temperature. Preferably, the slurry is maintained at a temperature in the range of from about 5°C to about 70°C, more preferably from about 20°C to about 70°C, still more preferably from about 45°C to about 60°C, and for a period of from about 15 to about 720, more preferably from about 30 to about 240, more preferably from about 60 to about 180 minutes. Care must be taken to avoid maintaining the slurry temperature at a level that would inactivate the protease enzyme or gelatinize any oat starch present. If the oat starch is gelatinized, it will become soluble, at which point separation from the desired oat protein will become difficult, and the concentration of oat protein in the final product will be reduced.

In the agitation step, the aqueous slurry is agitated by mechanical means for a period of time sufficient, when combined with heating and the addition of acid or base, to fractionate the oat substrate. The preferred degree of agitation is an amount sufficient to suspend the oat substrate, as well as the respective fractions resulting from the fractionation of the oat substrate. Care must be taken to avoid excess agitation and the corresponding high shear. High shear can act to render oat starch soluble and can degrade the protease enzyme, which as already discussed are undesirable.

Generally, any method of agitation may be used in the process of the present invention, including, but not limited to, propeller stirrers, paddle blenders, and recirculating pumps, with propeller stirrers being preferred. Preferably, the slurry is agitated with a propeller stirrer operating at a speed sufficient to suspend the oat substrate. Of course, the exact speed will depend upon the concentration of oat substrate in the slurry, the size of the vessel in which the slurry is being prepared, the slurry temperature, the propeller design, etc., and will be apparent to one skilled in the art.

The pH of the slurry is adjusted to outside the isoelectric range by the addition of either an acid or a base. This is necessary to effect the extraction of the oat protein fraction from the oat substrate. When an acid is used, the extraction is referred to as acidic extraction. When a base is used, the extraction is referred to as an alkaline extraction. The alkaline extraction is preferred.

In an acidic extraction, the amount of acid necessary for the process of the present invention is that required to give the aqueous slurry an acidic pH below the isoelectric range, with the preferred pH dependent upon the type of protease used. Preferably the amount used is that necessary to adjust the slurry pH to within the range of from about 1 to about 4, more preferably from about 1 to about 3. Care must be taken to avoid adjusting the pH of the slurry to a level at which the particular protease enzyme or enzymes used in the present invention are inactivated. Typically, if the slurry pH is below 3, it will have to be adjusted to above 3 prior to adding the protease to the slurry.

Generally, any food grade acid known to those skilled in the art may be used in the process of the present invention. Examples of useful acids include, but are not limited to, phosphoric acid, hydrogen chloride, citric acid, and mixtures thereof, with phosphoric acid being preferred.

In an alkaline extraction, the amount of base necessary for the process of the present invention is that required to give the aqueous slurry a basic pH, with the preferred pH dependent upon the type of protease utilized. Preferably the amount used is that necessary to adjust the slurry to a pH in the range of from about 8 to about 12, more preferably from about 10 to about 12.

Generally, any food grade base known to those skilled in the art may be used in the process of the present invention. Examples of useful bases include, but are not limited to, sodium carbonate, sodium hydroxide, calcium hydroxide, ammonium hydroxide, and mixtures thereof, with sodium carbonate and sodium hydroxide being preferred and sodium hydroxide being more preferred.

The protease used in the present invention is one which will render the soluble oat protein fraction stable, provided it is combined with the oat substrate prior to fractionation of the substrate. By stable, it is meant that the oat protein fraction will not precipitate out of solution, as typically happens with oat protein. Furthermore, when the aqueous solution of the present invention is dried, it produces a dried product comprising the soluble oat fractions already described herein. In the dried state, substantially all the resulting dried product, including the soluble oat protein fraction, will go into solution upon rehydration and form a stable solution. This is a function of the stability of the oat protein fraction. Once the oat protein fraction precipitates out of solution, the fraction is rendered substantially insoluble and will not go back into solution upon rehydration. This definition of stable applies to the initial aqueous slurry, as well as the purified, low fat, soluble oat fraction which forms the transparent aqueous solution upon rehydration, and the final low fat, transparent, stable oat fraction containing aqueous solution prepared by the process of the present invention. The protease is not necessary to extract the oat protein fraction from the oat substrate, as this can be accomplished solely by maintaining a proper slurry temperature and agitating the basic or acidic aqueous slurry. However, the protease is necessary for preparing a final stable soluble oat protein fraction which will not precipitate upon storage and which will go back into solution upon rehydration from a dried state.

The protease is also necessary to increase the yield of soluble oat protein fraction recovered in the final transparent aqueous solution of the present invention. If an oat substrate is fractionated without treatment with a protease, after the insoluble solid fraction is removed the remaining suspension comprises a soluble carbohydrate fraction, an unstable soluble oat protein fraction, an insoluble liquid fraction which is primarily oat fat, and an insoluble liquid fraction comprising oat protein in association with oat fat. These insoluble liquids impart a translucency to the aqueous suspension, and therefore must be removed to obtain a transparent aqueous solution. However, if the insoluble liquid fraction comprising oat protein in association with oat fat is removed, then the yield of oat protein in the final solution will be undesirably low.

To obtain maximum yield of soluble oat protein in the final aqueous solution of the process of the present invention, the insoluble liquid fraction comprising oat protein in association with oat fat must be minimized. This is accomplished by dissociating the oat fat from the oat protein. Upon dissociation, an insoluble liquid oat fat containing fraction and a soluble, oat protein fraction are obtained. Therefore, in the initial aqueous slurry of the present invention, the oat protein should be substantially dissociated from the oat fat.

This dissociation is accomplished by treating the oat substrate with protease during fractionation as described herein. The amount of protease necessary to dissociate the oat protein from the oat fat is that described herein for rendering the soluble oat protein fraction stable.

The protease also aids in increasing the rate at which the stable soluble oat protein fraction goes back into solution.

The protease enzyme is added after the initial slurry is prepared, and is preferably added simultaneously with the heating and agitation of the slurry and pH adjustment.

Protease enzymes which are known to work in the present invention include, but are not limited to, proteases that work in either the alkaline and acidic pH ranges, but have little or no amylase activity, with proteases that work in the alkaline pH range being preferred. More preferred are the bacterial alkaline proteases with no amylase activity and which exhibit lipase and beta-glucanase activity. Proteases preferred in the present invention include Optimase\ APL-440 and Opticlean\ L-1000, both of which are available from Solvay Enzymes, located in Elkhart, Indiana; Alcalase\, available from Novo Nordisk, located in Walton, Connecticut; papain; and mixtures thereof, with Optimase\ and Opticlean\, and mixtures thereof being preferred. In a still more preferred embodiment, the Opticlean\ and Optimase\ are added sequentially, in order, in conjunction with pH adjustment in a manner to prevent denaturing the proteases.

The amount of protease enzyme necessary for the process of the present invention is that required to prepare a stable, soluble oat protein fraction and maximize the yield of the fraction, and will depend upon factors such as the amount of time available for the enzyme to react, the type or types of enzymes being use, and the pH of the slurry and degree and time of heating and agitation used. Preferably, from about 0.1% to about 10.0%, more preferably from about 0.25% to about 2%, more preferably from about 0.40% to about 1% by weight, as a percentage of the oat substrate, of protease enzyme is combined with the aqueous slurry. The protease is preferably allowed to react with available oat protein in a basic or acidic, heated and agitated aqueous slurry for a period of time in the range of from about 15 to about 720, preferably from about 30 to about 240, more preferably from about 60 to about 180 minutes.

When longer reaction times are used, steps should be taken to inhibit the growth of microbial organisms in the slurry. Any methods known to those skilled in the art may be used. However, care has to be taken to avoid denaturing the protease enzyme. Examples of useful methods include, but are not limited to, addition of bacterial growth inhibiting compounds, including sulfite containing compounds; processing the slurry under sterile conditions; adjusting and/or maintaining process operating conditions such as temperature and pressure such that bacterial growth is inhibited, again taking care to avoid denaturing the protease enzyme; and mixtures thereof.

Since it is an object of the process of the present invention to obtain a final aqueous solution which contains a stable, soluble oat protein, it is desirable to obtain the maximum oat protein concentration practical in the final solution. This may be accomplished by maximizing the amount of stable, soluble oat protein present in the initial aqueous slurry. The soluble oat protein is in solution in the initial slurry, remains so throughout the process of the present invention, and is contained in the final aqueous solution of the present invention. Thus, it is preferred to have as great a protein concentration in the initial slurry as practical.

The fractionation produces a stable, translucent aqueous slurry which typically comprises from about 60% to about 95%, more typically from about 70% to about 90%, still more typically from about 75% to about 85% by weight insoluble solid fraction; from about 5% to about 10%, more typically from about 6% to about 10%, still more typically from about 6% to about 8% by weight insoluble liquid fraction; from about 5% to about 20%, more typically from about 8% to about 18%, still more typically from about 10% to about 15% by weight stable, soluble oat protein; from 0% to about 3%, more typically from 0% to about 2%, still more typically from 0% to about 1% by weight soluble oat fat; and from about 1% to about 8%, more typically from about 1% to about 5%, still more typically from about 3% to about 5% by weight soluble oat carbohydrate.

The insoluble solid fraction is primarily starch. It typically contains less than about 2% by weight fat, less than about 10% by weight protein, and greater than about 75% by weight carbohydrate. When a defatted oat substrate is used, the insoluble fraction is substantially unchanged.

The insoluble liquid fraction is primarily insoluble oat fat. Therefore, when a defatted oat substrate is used in the preparation of the initial translucent, aqueous slurry, the concentration of insoluble liquid fraction in the initial slurry will be correspondingly reduced by the amount of fat removed to produce the defatted oat substrate.

When a defatted oat substrate is used to prepare the initial slurry, the slurry typically comprises from about 60% to about 95%, more typically from about 70% to about 90%, still more typically from about 75% to about 85% by weight insoluble solid fraction; from about 1% to about 5%, more typically from about 1% to about 4%, still more typically from about 1% to about 2% by weight insoluble liquid fraction; from about 5% to about 20%, more typically from about 8% to about 18%, still more typically from about 10% to about 15% by weight stable, soluble oat protein; from 0% to about 3%, more typically from 0% to about 2%, more typically from 0% to about 1% by weight soluble oat fat; and from about 1% to about 8%, more typically from about 1% to about 5%, more typically from about 3% to about 5% by weight soluble oat carbohydrate.

After the oat substrate has been fractionated to form a translucent slurry as described herein, the insoluble liquid and solid fractions are removed from the slurry. The solid and liquid insoluble fractions can be removed in any order. Preferably the insoluble solid fraction is removed first to produce a suspension, followed by removal of the insoluble liquid fraction from the suspension to produce an aqueous solution.

The insoluble solid fraction can be removed from the slurry by any method known to those skilled in the art, preferably by physical separation. Examples of physical separation methods useful to remove the insoluble solids fraction from the slurry include, but are not limited to, centrifuging, microfiltration, a molecular sieve, a settling pond, and mixtures thereof, with centrifuging being preferred. The centrifuging can be accomplished by any method and centrifuge equipment known to those skilled in the art. Examples of centrifuge equipment useful to remove the insoluble solid fraction in the present invention include, but are not limited to, disc separators, decanter centrifuges, basket centrifuges, and batch centrifuges, with decanter centrifuges being preferred. More preferably, the slurry containing the insoluble solid and liquid fractions is centrifuged in a decanter centrifuge at a gravitational force of at least about [2500 G's] 24500 m/s², more preferably at least about [3000 G's] 29400 m/s², still more preferably at least about [3500 G's] 34300 m/s² for a period of at least about 1 minute, preferably for at least about 2 minutes, still more preferably at least 3 minutes, thereby removing the insoluble solid fraction from the slurry and producing a suspension comprising the insoluble liquid fraction and the soluble fractions.

Typically at least about 80%, more typically at least about 90%, more typically at least about 95% by weight of the available insoluble solid fraction is removed from the slurry.

The insoluble liquid fraction primarily comprises oat fat. This insoluble fat may be removed from the slurry by either physical separation techniques; by conversion into a water-soluble form, which then remains in solution with the remaining soluble oat protein fraction; or a combination thereof, with physical separation being preferred.

Although not tested, it is conceivable that at least a portion of the insoluble fat could be removed from the translucent slurry by converting the insoluble fat into water-soluble fatty acids through treatment with a lipase enzyme. A portion of the resulting fatty acids are water-soluble and can form a solution, in contrast to the suspension of insoluble fat resulting from fractionating the oat substrate. Once the fatty acids are in solution, they will remain in solution along with the soluble oat protein fraction after separation of the insoluble material from the slurry.

The lipase treatment of the insoluble fat can be carried out at any time after the aqueous slurry is prepared, and can be carried out in conjunction with agitation and heating, pH adjustment, and the protease treatment, preferably after the oat substrate is fractionated and prior to separation of any insoluble material. The amount of lipase necessary to reduce the insoluble fat into fatty acids will be apparent to one skilled in the art, and should range from about 0.1% to about 10%, more typically from about 0.25% to about 2%, still more typically from about 0.25% to about 1% by weight, based upon the weight of the initial oat substrate used to prepare the initial aqueous slurry. The lipase treatment can also be accomplished by treatment of the oat substrate with a protease enzyme having lipase activity. Any residual insoluble liquid fat and insoluble fatty acids remaining after lipase treatment may be removed by physical separation as described herein.

In the preferred embodiment wherein the insoluble solid fraction is first removed from the slurry to produce a suspension, after the solid fraction has been removed the resulting suspension is concentrated and then subjected to a physical separation process.

Examples of methods useful herein to concentrate the suspension include, but are not limited to, evaporation, reverse osmosis, freeze concentration, membrane filtration, ultrafiltration, and mixtures thereof, with evaporation being preferred, and evaporation utilizing heat and a vacuum being more preferred.

Preferably the suspension is concentrated to a solids concentration of at least about 5%, more preferably at least about 10%, still more preferably at least about 15% by weight, expressed as a percentage of the total suspension, and concurrently heated and/or maintained at a temperature of at least about 25°C, more preferably at least about 40°C, still more preferably at least about 50°C.

The physical separation of the insoluble liquid fraction may be accomplished by any method known to those skilled in the art. Examples of physical separation methods useful herein include, but are not limited to, centrifuging, microfiltration, a molecular sieve, a settling pond, mixtures thereof, with centrifuging and microfiltration, and mixtures thereof being preferred, and centrifuging followed by microfiltration being more preferred. Another separation method which can be utilized is to absorb the insoluble liquid fat into the insoluble starch and remove both in the physical separation of the insoluble solid material.

The centrifuging of the suspension containing the insoluble liquid fraction can be accomplished by any method and centrifuge equipment known to those skilled in the art. Examples of centrifuging equipment useful herein include, but are not limited to, disc separators, decanter centrifuges, basket centrifuges, and batch centrifuges, with disc separators being preferred. In a preferred centrifuging method, the suspension is heated to and/or maintained at a minimum temperature of about 25°C, preferably about 40°C, more preferably about 50°C, and then introduced into a liquid/liquid disc separator. The separator is operated at a minimum of about [2500 G's] 24500 m/s², preferably about [3000 G's] 29400 m/s², more preferably about [3500 G's] 34300 m/s². The residence time of the suspension in the separator is in the range of from about 1 to about 10 minutes, preferably from about 2 to about 5 minutes, more preferably from about 2 to about 3 minutes.

The microfiltration can be accomplished by any method and filtration equipment known to those skilled in the art. Examples of microfiltration equipment useful in the present invention include, but are not limited to, spiral membrane systems, tubular systems, ceramic membranes, and stainless steel membranes, with spiral membrane systems being preferred.

In a preferred microfiltration method, following concentrating and centrifuging, the suspension is heated to and/or maintained at a temperature of at least about 25°C, more preferably at least about 40°C, still more preferably at least about 50°C. The heated and concentrated suspension is introduced into a spiral wound microfilter element. The filter is operated at a transmembrane pressure in the range of from about [5 to about 50 psi] 3,4 to about 34 kPa, preferably from about [10 to about 30 psi] 6,9 to about 20,7 kPa, more preferably from about [10 to about 20 psi] 6,9 to about 13,8 kPa.

In the physical separation method, typically at least about 80%, more typically at least about 90%, more typically at least about 95% by weight of the available insoluble liquid fraction is removed from the slurry and/or suspension.

The term suspension, as used herein, refers to an aqueous composition wherein the particulate matter remains in suspension in the aqueous environment, and does not settle. This is in contrast to a slurry, which as used herein refers to an aqueous composition wherein the particulate matter will not remain in suspension, but will settle in the absence of agitation or other means of supporting the particulate matter. The term solution has its normal meaning as understood by one skilled in the art.

The final transparent aqueous solution of the present invention typically comprises from about 30% to about 80%, more typically from about 40% to about 70%, more typically from about 50% to about 60% by weight stable, soluble oat protein; from 0% to about 3%, more typically from 0% to about 2%, still more typically from 0% to about 1% by weight soluble oat fat; and from about 10% to about 40%, more typically from about 15% to about 35%, still more typically from about 20% to about 30% by weight soluble oat carbohydrate, and typically contains a maximum of about 0.5%, preferably about 0.2%, still more preferably about 0.1% by volume of residual insoluble material. The final transparent aqueous solution may further comprise soluble fatty acids, if a portion of the insoluble liquid fat is converted to fatty acids, although this is not preferred

To obtain a transparent aqueous solution, the size of any insoluble material present in the solution must be minimal, so as to not scatter or diffuse light. The maximum particle size of the residual insoluble material contained in the final, low fat, transparent aqueous solution of the present invention is typically about 1, preferably about 0.2, more preferably about 0.1 µm.

In a preferred embodiment of the present invention, the final oat protein containing aqueous solution is further treated to prevent or inhibit the growth of bacteria. This will provide a product which will be microbiologically stable. Microbiological stability is different from the phase stability that has already been discussed herein, and therefore can be stored and used by consumers over extended periods of time. The methods of treatment that can be used will be known by those skilled in the art. Examples of useful methods include, but are not limited to, lowering the water activity of the solution, for example by drying the solution to obtain a solid residue or adding a solvent such as propylene glycol; adding bactericides to the aqueous solution; acid treatment; lowering the solution temperature; and mixtures thereof; with lowering the water activity being preferred. In a more preferred embodiment, the water activity is lowered to a maximum level of about 0.65, more preferably about 0.60, still more preferably about 0.50.

A preferred process of the present invention comprises:
a) grinding oat groats to form an oat flour containing a dense, fine fraction of regularly shaped particles and a light, coarse fraction of irregularly shaped particles, wherein the fine fraction comprises oat protein, oat carbohydrate and fat;
b) preparing an aqueous slurry comprising from about 8% to about 12% by weight of the fine oat flour fraction;
c) dissolving the soluble fraction of the fine oat flour fraction by heating the aqueous slurry to a temperature in the range of from about 45°C to about 60°C in conjunction with agitation for a period of time in the range of from about 60 minutes to about 180 minutes, while simultaneously treating the aqueous slurry with from about 0.4% to about 1% by weight, based on the weight of the fine oat flour, of a mixture of Opticlean\ and Optimase\ enzyme, added sequentially in respective order, and sufficient sodium hydroxide to adjust the initial pH of the slurry to within the range of from about 10 to about 12, thereby obtaining a slurry comprising from about 75% to about 85% by weight of an insoluble solid fraction, from about 6% to about 8% by weight of an insoluble liquid fraction, from about 10% to about 15% by weight of a stable, soluble oat protein fraction having a minimum solubility of about 90%, from about 3% to about 5% by weight of a soluble oat carbohydrate fraction, and from 0% to about 1% by weight of a soluble oat fat fraction;
d) centrifuging the slurry at a minimum gravitational force of about [3500 G's] 34300 m/s² for a period of at least about 3 minutes, thereby removing at least about 95% by weight of the available insoluble solid fraction and obtaining an aqueous suspension containing the soluble oat fractions and insoluble liquid fraction;
e) concentrating the suspension to a concentration of at least about 15% solids by weight, and heating and/or maintaining the suspension at a temperature of at least 50°C; and
f) separating the insoluble liquid fraction by liquid/liquid disc separation at a gravitational force of at least [3,500 G's] 34300 m/s² or a period of time in the range of from about 2 to 3 minutes, followed by microfiltration in a spiral wound microfilter element operated at a transmembrane pressure in the range of from about [10 to about 20 psi] 6,9 to about 13,8 kPa, thereby recovering a transparent, aqueous solution comprising water, from about 50% to about 60% by weight stable, soluble oat protein fraction, from about 20% to about 30% by weight soluble oat carbohydrate, and from 0% to about 1% by weight soluble oat fat, and which contains a maximum of about 0.1% by volume of residual insoluble material.

Also preferred is the product prepared by the aforementioned preferred process.

The process of the present invention provides for a significant yield of soluble oat protein fraction recovered, based on the starting oat substrate weight. Of course it is preferred to obtain a maximum yield. In the present invention the yield is typically in the range of from about 10% to about 30%, more typically from about 15% to about 30%, still more typically from about 15% to about 25%.

The present invention also includes the soluble aqueous solution product prepared by the process of the present invention, as already described herein.

The present invention also includes a final solid, i.e., dried, mixture comprising the stable, soluble oat protein fraction, soluble oat fat fraction, and soluble oat carbohydrate fraction as already described herein, including in the same relative concentrations. The solid mixture is obtained by drying the final aqueous solution of the present invention to a moisture level of no greater than about 12%, preferably about 10%, still more preferably about 8% by weight. The purified solid mixture has an oat protein solubility in solution of at least 70%, preferably at least 85%, more preferably at least 95%. The solubility is determined in accordance with the nitrogen solubility method set forth in the paper "Protein Isolate from High Protein Oats: Preparation, Composition and Properties", Y. Wu, K. Sexson, J. Cluskey and G. Inglett, J. Food Sci., Vol. 42, No. 5, pp. 1383-1386 (1977).

The final stable, soluble oat protein fraction of the process of the present invention, including in its dried form and when in solution as described above, may also be characterized by its molecular properties. The soluble oat protein has a molecular weight of less than about 30,000, preferably less than 10,000, more preferably less than 3,000. The molecular weight is a factor of the degree of treatment of the initial oat substrate with a protease enzyme during fractionation, as already described herein.

While not intending to be bound by theory, it is unexpected and surprising that a transparent, stable, oat protein containing solution can be prepared from an oat substrate by the process of the present invention. There is nothing that teaches or suggest that the fat in the form of an insoluble liquid can be separated from the soluble oat protein fraction, thereby producing a transparent, stable, oat protein containing aqueous solution. It is also unexpected and surprising that when in a dried state, the resulting oat protein containing mixture will produce a transparent stable solution upon rehydration.

The present invention is further illustrated, but not limited by, the following examples.

### EXAMPLES

### Example 1

The fine fraction of oat flour is slurried with soft water at a ratio of 1átoá10 parts by weight. The slurry is heated to 55-60°C and agitated. To the slurry, 2% soda ash (Na2CO3) by weight of oat flour is added to adjust the pH to 9.5-10.5. Finally, 1% protease enzyme (Optimase\) by weight of oat flour is added to the slurry. The slurry is held at 55-60°C with mild agitation for 1-2 hours, thereby fractionating the oat flour into an insoluble solid fraction, an insoluble liquid fraction, a soluble oat protein fraction, a soluble oat fat fraction, and a soluble oat carbohydrate fraction. The slurry is then centrifuged at [3200 G's] 31400 m/s² for 3 minutes to separate the insoluble solid fraction, which produces an aqueous suspension containing an insoluble liquid fraction, a soluble oat protein fraction, a soluble oat fat fraction, and a soluble oat carbohydrate fraction. The soluble oat protein containing suspension is then neutralized with phosphoric acid to a pH of 6-6.5. The suspension is then concentrated in a falling film evaporator from a starting solids level of about 2-2.5% to 15-20% solids.

The concentrated suspension is then heated to 50-60°C and centrifuged using a liquid/liquid separator commonly used for separating cream from milk. From this separator, two streams are obtained - a light phase which contains 25-40% insoluble oil and a heavy phase which contains the soluble oat protein. Next, the heavy phase (oat protein containing suspension) is processed using a spiral-wound microfiltration system with a nominal pore size of 0.1 µm. The system is operated at 50-55°C with a transmembrane pressure of [10-20 psi] 6,9-13,8 kPa. The solution that goes through the filter (the permeate) is then concentrated and spray-dried to give a tan powder with a protein content of 50-60% and a fat content of less than 1%. The powder can be mixed with water to make a 2-5% aqueous solution (by weight) which is transparent and which does not separate on standing.

### Example 2

Oat flakes are slurried with water in a ratio of 1:12 parts by weight. The slurry is heated to 55-60°C and agitated. Two percent (2%) soda ash (Na2CO3) by weight of oat flakes is added to the slurry to adjust the pH to 9.5-10.5. At the same time, 0.5% protease enzyme (Optimase\) by weight of oat flour is added to the slurry. The slurry is held at 55-60°C with mild agitation for 1-2 hours, thereby fractionating the oat flour into an insoluble solid fraction, an insoluble liquid fraction, a soluble oat protein fraction, a soluble oat fat fraction, and a soluble oat carbohydrate fraction. The slurry is then centrifuged at [3200 G's] 31400 m/s² for 2-3 minutes to separate the insoluble solid fraction, which produces an aqueous suspension containing an insoluble liquid fraction, a soluble oat protein fraction, a soluble oat fat fraction, and a soluble oat carbohydrate fraction. The soluble oat protein containing suspension is neutralized with any food acid such as phosphoric acid to a pH of 6-7. The suspension is then concentrated in a falling film evaporator from a starting solids level of 1.5-2.0% to 5-10% solids by weight. This aqueous suspension is heated to 45-55°C and fed to a spiral-wound microfilter with a nominal pore size of 0.1 micron. The system is operated at a transmembrane pressure of [10-20 psi] 6,9-13,8 kPa. The solution that passes through the filter (permeate) contains the soluble oat protein. This permeate is concentrated in an evaporator and spray-dried to give a tan powder. The powder has a protein content of 50-60% and a fat content less than 1%. When this powder is rehydrated in water to make a 2-5% solution by weight, the solution is transparent and does not separate on standing. The yield of the oat protein powder is 10-15% based on the starting oat flour weight.

### Example 3

Whole oat flour is slurried with soft water in a ratio of one part flour to ten parts water by weight. One and one-half percent NaOH by weight of oat flour is added to the slurry to adjust the slurry pH to 11-12. The slurry is heated to 50°C and stirred. After 1 hour, 0.5% alkaline protease enzyme (Opticlean\) is added to the slurry. The slurry is held at 50°C for 30-60 minutes with mild agitation. The pH drops to 10-11. Then, 0.5% protease enzyme (Optimase\) is added to the slurry and held at 50°C with mixing for 30-60 minutes, thereby producing an aqueous slurry which contains an insoluble solid fraction, an insoluble liquid fraction, a soluble oat protein fraction, a soluble oat fat fraction, and a soluble oat carbohydrate fraction. The slurry is then centrifuged at [4000 G's] 39800 m/s² for 2-3 minutes to remove the insoluble solid fraction, which produces an aqueous suspension containing an insoluble liquid fraction, a soluble oat protein fraction, a soluble oat fat fraction, and a soluble oat carbohydrate fraction. The aqueous oat protein containing suspension is neutralized with phosphoric acid to a pH of 6-7. The suspension is concentrated in a falling film to 10-20% solids. This suspension is heated to 50-60°C and fed to a liquid/liquid separator typically used for separating cream from milk. This separator produces a light phase which contains 25-50% oil, and a heavy phase which contains the soluble oat protein. The heavy phase is pumped through a spiral-wound ultrafilter with a molecular weight cutoff of 500,000 to remove suspended material and produce a transparent aqueous solution which contains soluble oat protein, soluble oat fat, and soluble oat carbohydrate. This solution is the permeate from the filter (i.e. it passes through the filter). This permeate is then concentrated and spray-dried to give a tan colored powder which contains 50-65% protein and less than 1% fat. When this powder is rehydrated with water to make a solution of 2-10% solids, the solution is transparent and does not settle out upon standing. The tan powder, which is the low fat oat protein fraction, represents 15-25% of the weight of starting oat flour.

### Example 4

Fine oat flour is slurried with water in a ratio of one part flour to ten parts water by weight. Two percent soda ash (Na2CO3) and 1% papain by weight of oat flour are added to the slurry, which is then heated to 55-60°C, stirred, and held for 18 hours, thereby fractionating the oat flour into an insoluble solid fraction, an insoluble liquid fraction, a soluble oat protein fraction, a soluble oat fat fraction, and a soluble oat carbohydrate fraction. The slurry is then centrifuged at [3500 G's] 34300 m/s² for 2-3 minutes to separate the insoluble solid fraction, which produces an aqueous suspension containing an insoluble liquid fraction, a soluble oat protein fraction, a soluble oat fat fraction, and a soluble oat carbohydrate fraction. The aqueous suspension is then neutralized with acid to a pH of 5-7, and concentrated to 8-15% solids using a reverse osmosis spiral-wound membrane system (Separatech\ Membrane NF45, Separation Technology, Inc., St. Paul, MN). This suspension is then processed using a spiral-wound microfiltration system with a nominal pore size of 0.1 µm. The system is operated at 25-30°C with a transmembrane pressure of [10-20 psi] 6,9-13,8 kPa. The solution that passes through the microfilter (permeate) contains the soluble oat protein and is transparent. This solution is evaporated using a falling film evaporator to 20-40% solids, and then spray dried. The spray-dried powder is tan in color and contains 5-10% moisture, 50-70% protein, 5-15% ash, and less than 1% fat. When this powder is rehydrated with water to make a solution, the solution is transparent, and does not separate on standing.

### Example 5

The fine fraction of oat flour is slurried with water in a ratio of 1átoá10 parts by weight. To this slurry, 2% soda ash and 1% Alcalase\ enzyme by weight of oat flour is added. The slurry is heated to 55-60°C, stirred, and held for 18-24 hours. The slurry is then centrifuged at [3500 G's] 34300 m/s² for 5-10 minutes to give a transparent liquid solution and a solid, insoluble material. The aqueous solution is freeze-dried to give a tan powder which is 10-20% stable, soluble protein. Upon rehydration with water, the resulting solution is transparent and does not separate on standing.

### Example 6

Oat flakes are slurried in water at a ratio of one part flakes to ten parts water by weight. The slurry is heated to 50-55°C while simultaneously adding 2% soda ash and 1% Alcalase\ by weight of oat flakes. The slurry is stirred and held at 50-55°C for 2-4 hours, thereby fractionating the oat flour into an insoluble solid fraction, an insoluble liquid fraction, a soluble oat protein fraction, a soluble oat fat fraction, and a soluble oat carbohydrate fraction. The slurry is then centrifuged at [3500 G's] 34300 m/s² for 5-10 minutes to remove the insoluble solid fraction, which produces an aqueous suspension containing an insoluble liquid fraction, a soluble oat protein fraction, a soluble oat fat fraction, and a soluble oat carbohydrate fraction. This suspension is then processed through a spiral-wound microfiltration system with a nominal pore size of 0.1 µm at an operating temperature of 50-55°C and a transmembrane pressure of [10-20 psi] 6,9-13,8 kPa. The aqueous solution which passes through the filter (the permeate) contains the soluble oat protein and is transparent. This permeate is then concentrated to 20-40% solids in a falling film evaporator and spray-dried. The resulting powder is tan in color and contains 5-10% moisture, 10-25% protein, and less than 10% fat. Upon rehydration in water, the resulting solution is transparent and does not separate on standing.

## Claims

1. A process for fractionating oats to obtain a transparent, stable, soluble oat protein containing aqueous solution, the process being characterized by the steps of:
a) preparing an aqueous slurry comprising water and an oat substrate;
b) fractionating the oat substrate by maintaining the slurry at a sufficient temperature and treating the slurry with sufficient agitation, sufficient base or acid to adjust the pH of the aqueous slurry to outside the isoelectric range, and sufficient protease to hydrolyze sufficient oat protein, thereby obtaining a translucent slurry which comprises an insoluble solid fraction, an insoluble liquid fraction, a stable, soluble oat protein fraction, a soluble oat fat fraction, and a soluble oat carbohydrate fraction; and
c) removing the insoluble liquid fraction and the insoluble solid fraction from the slurry, thereby recovering a final transparent, low fat, stable aqueous solution comprising water and a stable, soluble oat protein fraction, a soluble oat fat fraction, and a soluble oat carbohydrate fraction.

2. A process according to claim 1, characterized in that the concentration of oats in the slurry ranges from 1 % to 15% by weight, based upon the total weight of the aqueous slurry.

3. A process according to claim 1 or 2, characterized in that the oat substrate is sized reduced by grinding in a hammermill to form an oat flour, fine oat flour, oat meal, oat flakes, and mixtures thereof.

4. A process according to claim 3, characterized in that the oat substrate is size reduced to form an oat flour containing a dense, fine fraction of regularly shaped particles and a light, coarse fraction of irregularly shaped particles, wherein the fine fraction comprises oat protein and oat carbohydrate, and wherein the fine fraction is recovered from the coarse fraction and fractionated.

5. A process according to any of claims 1 to 4, characterized in that the aqueous slurry is maintained at a temperature in the range of from 45°C to 60°C for a period of time in the range of from 60 to 180 minutes.

6. A process according to any of claims 1 to 5, characterized in that the aqueous slurry is rendered basic by the addition of a base selected from the group comprising sodium carbonate and sodium hydroxide, and mixtures thereof, and wherein the aqueous slurry has a pH in the range of from about 10 to 12.

7. A process according to any of claims 1 to 6, characterized in that from 0.40% to 0.60% by weight of protease enzyme, as a percentage of the oat substrate, is added to the aqueous slurry and is allowed to react with available oat protein for a period of time in the range of from 60 to 180 minutes.

8. A process according to claim 7, characterized in that the aqueous slurry comprises from 75% to 85% by weight of insoluble solid fraction, from 6% to 8% by weight insoluble liquid fraction; from 10% to 15% by weight stable, soluble oat protein; from 0% to 1% by weight soluble oat fat; and from 3% to 5% by weight soluble oat carbohydrate.

9. A process according to any of claims 1 to 8, characterized in that the insoluble solid fraction is removed by centrifuging the slurry in a decanter centrifuge operated at a minimum [3,000 G's] 29400 m/s² for a period of at least about 2 minutes, and the insoluble liquid fraction is subsequently removed by concentrating the suspension to a solids concentration of at least about 10% by weight and heating the suspension to a temperature of at least 40°C and centrifuging the suspension in a liquid/liquid separator operated at a minimum of [3,000 G's] 29400 m/s² for a period in the range of from about 2 to about 5 minutes and filtered in a spiral wound microfilter element operated at a transmembrane pressure in the range of from [10 to 20 psi] 6,9-13,8 kPa.

10. A process according to claim 9, characterized in that the final transparent aqueous solution comprises from 50% to 60% by weight stable, soluble oat protein; from 0% to 1% by weight soluble oat fat; and from 20% to 30% by weight soluble oat carbohydrate, and contains a maximum of 0.1% by volume of residual insoluble material.

11. A process according to any of claims 1 to 10, characterized in that following separation from the insoluble fraction, the final transparent soluble oat protein containing aqueous solution is stabilized to prevent the growth of bacteria.

12. A stable, soluble oat protein fraction prepared by the method comprising:
a) grinding oat groats to form an oat flour containing a dense, fine fraction of regularly shaped particles and a light, coarse fraction of irregularly shaped particles, wherein the fine fraction comprises oat protein, oat carbohydrate and fat;
b) preparing an aqueous slurry comprising from 8% to 12% by weight of the fine oat flour fraction;
c) dissolving the soluble fraction of the fine oat flour fraction by heating the aqueous slurry to a temperature in the range of from 45°C to 60°C in conjunction with agitation for a period of time in the range of from 60 minutes to 180 minutes, while simultaneously treating the aqueous slurry with from 0.4% to 1% by weight, based on the weight of the fine oat flour, of a mixture of protease enzyme, added sequentially in respective order, and sufficient sodium hydroxide to adjust the initial pH of the slurry to within the range of from 10 to 12, thereby obtaining a slurry comprising from 75% to 85% by weight of an insoluble solid fraction, from 6% to 8% by weight of an insoluble liquid fraction, from 10% to 15% by weight of a stable, soluble oat protein fraction having a minimum solubility of 90%, from 3% to 5% by weight of a soluble oat carbohydrate fraction, and from 0% to 1% by weight of a soluble oat fat fraction;
d) centrifuging the slurry at a minimum gravitational force of about [3500 G's] 34300 m/s² for a period of at least about 3 minutes, thereby removing at least about 95% by weight of the available insoluble solid fraction and obtaining an aqueous suspension containing the soluble oat fractions and insoluble liquid fraction;
e) concentrating the suspension to a concentration of at least about 15% solids by weight, and heating and/or maintaining the suspension at a temperature of at least 50°C; and
f) separating the insoluble liquid fraction by liquid/liquid disc separation at a gravitational force of at least [3,500 G's] 34300 m/s² or a period of time in the range of from about 2 to 3 minutes, followed by microfiltration in a spiral wound microfilter element operated at a transmembrane pressure in the range of from [10 to 20 psi] 6,9-13,8 kPa, thereby recovering a transparent, aqueous solution comprising water, from 50% to 60% by weight stable, soluble oat protein fraction, from 20% to 30% by weight soluble oat carbohydrate, and from 0% to 1% by weight soluble oat fat, and which contains a maximum of 0.1% by volume of residual insoluble material.

13. A transparent aqueous solution according to claim 12, characterized by from 50% to 60% by weight stable, soluble oat protein; from 0% to 1% by weight soluble oat fat; and from 20% to 30% by weight soluble oat carbohydrate, and contains a maximum of 0.1% by volume of residual insoluble material.

14. A solid, low fat oat protein containing mixture in a purified form characterized by from 10% to 40% by weight soluble oat carbohydrate, from 0% to 3% by weight soluble oat fat, and from 30% to 80% by weight stable, soluble oat protein, wherein said fraction has a maximum particle size of insoluble material in solution of 0.2 µm and wherein said fraction provides a transparent aqueous solution when put into solution in water.

15. A solid oat protein containing mixture according to claim 14, characterized in that the soluble oat protein fraction has a solubility of at least about 85%.

16. A solid oat protein containing mixture according to claim 15, characterized by from 20% to 30% by weight soluble oat carbohydrate, from 0% to 1% by weight soluble oat fat, and from 50% to 60% by weight stable, soluble oat protein, wherein said fraction has a maximum particle size of insoluble material in solution of 0.1 µm.

## Patentansprüche

1. Verfahren zur Fraktionierung von Hafer, um eine transparente, stabile, lösliche Haferprotein enthaltende wässrige Lösung zu erhalten, welches Verfahren gekennzeichnet ist durch die Schritte:
(a) Herstellen einer wässrigen Aufschlämmung, die Wasser und Hafersubstrat aufweist;
(b) Fraktionieren des Hafersubstrats, indem die Aufschlämmung bei einer ausreichenden Temperatur gehalten wird und die unter ausreichendem Rohren behandelt wird mit ausreichend Base oder Säure zur Einstellung des pH-Wertes der wässrigen Aufschlämmung außerhalb des isoelektrischen Bereichs und ausreichend Protease zum Hydrolysieren von ausreichend Haferprotein, wodurch eine lichtdurchlässige Aufschlämmung erhalten wird, die eine unlösliche feste Fraktion aufweist, eine unlösliche flüssige Fraktion, eine stabile, lösliche Haferproteinfraktion, eine lösliche Haferfettfraktion und eine lösliche Haferkohlenhydratfraktion;
(c) Entfernen der unlöslichen flüssigen Fraktion und der unlöslichen festen Fraktion aus der Aufschlämmung, wodurch eine gebrauchsfertige transparente, fettarme, stabile wässrige Lösung aufbereitet wird, die Wasser und eine stabile, lösliche Haferproteinfraktion, eine lösliche Haferfettfraktion und eine lösliche Haferkohlenhydratfraktion aufweist

2. Verfahren nach Anspruch 1, dadurch gekennzeichnet, daß die Konzentration von Hafer in der Aufschlämmung im Bereich von 1 % ... 15 Gewichtsprozent bezogen auf das Gesamtgewicht der wässrigen Aufschlämmung liegt.

3. Verfahren nach Anspruch 1 oder 2, dadurch gekennzeichnet, daß das Hafersubstrat durch Feinvermahlung in einer Hammermühle unter Erzeugung eines Hafermehls, Haferfeinmehls, Haferschrotmehls, Haferflocken und Mischungen davon zerkleinert wird.

4. Verfahren nach Anspruch 3, dadurch gekennzeichnet, daß das Hafersubstrat unter Erzeugung eines Hafermehls zerkleinert wird, das eine dichte feine Fraktion regelmäßig geformter Partikel enthält sowie eine helle grobe Fraktion unregelmäßig geformter Partikel, wobei die feine Fraktion Haferprotein und Haferkohlenhydrat umfaßt und wobei die feine Fraktion von der groben Fraktion aufbereitet und fraktioniert wird.

5. Verfahren nach einem der Ansprüche 1 bis 4, dadurch gekennzeichnet, daß die wässrige Aufschlämmung bei einer Temperatur im Bereich von 45 ° ... 60 °C für eine Zeitdauer im Bereich von 60 ... 180 Minuten gehalten wird.

6. Verfahren nach einem der Ansprüche 1 bis 5, dadurch gekennzeichnet, daß die wässrige Aufschlämmung durch Zusatz von einer Base basisch gemacht wird, welche Base ausgewählt wird aus der Gruppe, bestehend aus Natriumcarbonat, Natriumhydroxid und Mischungen davon und wobei die wässrige Aufschlämmung einen pH-Wert im Bereich von etwa 10 ... 12 hat.

7. Verfahren nach einem der Ansprüche 1 bis 6, dadurch gekennzeichnet, daß der wässrigen Aufschlämmung 0,40 % ... 0,60 Gewichtsprozent Poteaseenzym als Prozentsatz des Hafersubstrats zugosetzt werden und für eine Zeitdauer im Bereich von 60 ... 180 Minuten umgesetzt wird mit verfügbarem Haferprotein.

8. Verfahren nach Anspruch 7, dadurch gekennzeichnet, daß die wässrige Aufschlämmung aufweist: 75 % ... 85 Gewichtsprozent unlösliche feste Fraktion, 6 % ... 8 Gewichtsprozent unlösliche flüssige Fraktion, 10 % ... 15 Gewichtsprozent stabiles lösliches Haferprotein, 0 % ... 1 Gewichtsprozent lösliches Haferfett und 3 % ... 5 Gewichtsprozent lösliches Haferkohlenhydrat.

9. Verfahren nach einem der Ansprüche 1 bis 8, dadurch gekennzeichnet, daß die unlösliche feste Fraktion durch Zentrifugieren der Aufschlämmung in einer Dekantierzentrifuge entfernt wird, die bei einem Minimum von 29400 m/s² (3.000 G) für eine Dauer von mindestens etwa 2 Minuten betrieben wird, und die unlösliche flüssige Fraktion danach entfernt wird durch Einengen der Suspension auf eine Feststoffkonzentration von mindestens etwa 10 Gewichtsprozent und Erhitzen der Suspension auf eine Temperatur von mindestens 40 °C und Zentrifugieren der Suspension in einem Flüssig/Flüssig-Abscheider, betrieben bei einem Minimum von 29400 m/s² (3.000 G) für eine Dauer von mindestens etwa 2 bis etwa 5 Minuten und gefiltert in einem Spirolmikrofilterelement, das mit einem Transmembrandruck im Bereich von 6,9 ... 13,8 kPa (10 ...20 psi) betrieben wird.

10. Verfahren nach Anspruch 9, dadurch gekennzeichnet, daß die gebrauchsfertige wässrige Lösung 50 % ... 60 Gewichtsprozent stabiles lösliches Haferprotein, 0 % ... 1 Gewichtsprozent lösliches Haferfett und 20 % ... 30 Gewichtsprozent lösliches Haferkohlenhydrat aufweist und ein Minimum von 0,1 % Volumenprozent restliches unlösliches Material.

11. Verfahren nach einem der Ansprüche 1 bis 10, dadurch gekennzeichnet, daß in der nachfolgenden Abtrennung von der unlöslichen Fraktion die gebrauchsfertige, transparente lösliche, Haferprotein enthaltende wässrige Lösung stabilisiert ist, um des Bakterienwachstum zu verhindern.

12. Stabile, lösliche Haferproteinfraktion, hergestellt nach dem Verfahren, umfassend:
(a) Feinmahlen von Hafergrütze zur Erzeugung eines Hafermehls, das eine dichte feine Fraktion regelmäßig geformter Partikel enthält sowie eine helle grobe Fraktion unregelmäßig geformter Partikel, wobei die feine Fraktion Haferprotein, Haferkohlenhydrat und -fett umfaßt;
(b) Herstellen einer wässrigen Aufschlämmung, umfassend 8 % ... 12 Gewichtsprozent Haferfeinmehlfraktion;
(c) Auflösen der löslichen Fraktion der Haferfeinmehlfraktion durch Erhitzen der wässrigen Aufschlämmung auf eine Temperatur im Bereich von 45 ° ... 60 °C unter Rühren für eine Zeitdauer im Bereich von 60 ... 180 Minuten, während gleichzeitig die wässrige Aufschlämmung mit 0,4 % ... 1 Gewichtsprozent bezogen auf das Gewicht der Haferfeinmehlfraktion einer Mischung von Proteaseenzym behandelt wird, zugesetzt in der entsprechenden Reihenfolge sowie ausreichend Natriumhydroxid zum Einstellen des Anfangs-pH-Wertes auf einen Bereich von 19 ... 12, wodurch eine Aufschlämmung erhalten wird, die 75 % ... 85 Gewichtsprozent einer unlöslichen festen Fraktion aufweist, 6 % ... 8 Gewichtsprozent einer unlöslichen flüssigen Fraktion, 10 % ... 15 Gewichtsprozent einer stabilen, löslichen Haferproteinfraktion mit einer Mindestlöslichkeit von 90 %, 3 % ... 5 Gewichtsprozent einer löslichen Haferkohlenhydratfraktion und 0% ... 1 Gewichtsprozent einer löslichen Haferfettfraktion;
(d) Zentrifugieren der Aufschlämmung bei einem Minimum der Schwerkraft von 34.300 m/s² (3500 g) für eine Zeitdauer von mindestens etwa 3 Minuten, wodurch mindestens etwa 95 Gewichtsprozent der verfügbaren unlöslichen festen Fraktion entfernt werden und eine wässrige Suspension erhalten wird, die lösliche Haferfraktionen und unlösliche flüssige Fraktionen enthält;
(e) Einengen der Suspension auf eine Konzentration von mindestens etwa 15 Gewichtsprozent Feststoffe und Erhitzen und/oder Halten der Suspension bei einer Temperatur von mindestens 50 °C; sowie
(f) Abtrennen der unslöslichen Fraktion durch Flüssig/Flüssig-Scheibentrennung bei einer Schwerkraft von mindestens 34.300 m/s² (3500 g) für eine Zeitdauer im Bereich von etwa 2 bis 3 Minuten, gefolgt von einer Mikrofiltration in einem Spiralmikrofilterelement, das mit einem Transmembrandruck im Bereich von 6,9 ... 13,8 kPa (10 ...20 psi) betrieben wird, wodurch eine transparente, wässrige Lösung aufbereitet wird, die 50 % ... 60 Gewichtsprozent stabile lösliche Haferproteinfraktion, 20 % ... 30 Gewichtsprozent lösliches Haferkohlenhydrat und 0 % ... 1 Gewichtsprozent lösliches Haferfett aufweist und ein Maximum von 0,1 Volumenprozent restliches unlösliches Material enthält.

13. Transparente wässrige Lösung nach Anspruch 12, gekennzeichnet durch 50 % ... 60 Gewichtsprozent stabiles lösliches Haferprotein, 0 % ... 1 Gewichtsprozent lösliches Haferfett und 20 % ... 30 Gewichtsprozent lösliches Haferkohlenhydrat und enthaltend ein Maximum von 0,1 Volumenprozent restliches unlösliches Material.

14. Festes, fettarmes Haferprotein enthaltende Mischung in einer gereinigten Form, gekennzeichnet durch 10 % ... 40 Gewichtsprozent lösliches Haferkohlenhydrat, 0 % ... 3 Gewichtsprozent lösliches Haferfett und 30 % ... 80 Gewichtsprozent stabiles lösliches Haferprotein, wobei die Fraktion eine maximale Partikelgröße von unlöslichem Material in Lösung von 0,2 µm hat und wobei die Fraktion eine transparente wässrige Lösung liefert, wenn sie in Wasser in Lösung gebracht wird.

15. Festes Haferprotein enthaltende Mischung nach Anspruch 14, dadurch gekennzeichnet, daß die lösliche Haferproteinfraktion eine Löslichkeit von mindestens etwa 85 % hat.

16. Festes Haferprotein enthaltende Mischung nach Anspruch 15, gekennzeichnet durch 20 % ... 30 Gewichtsprozent lösliches Haferkohlenhydrat, 0 % ... 1 Gewichtsprozent lösliches Haferfett und 50 % ... 60 Gewichtsprozent stabiles lösliches Haferprotein, wobei die Fraktion eine maximale Partikelgröße von unlöslichem Material in Lösung von 0,1 µm hat.

## Revendications

1. Procédé pour fractionner de l'avoine pour obtenir une solution aqueuse contenant des protéines d'avoine solubles, stables, transparente, le procédé étant caractérisé par les étapes suivantes :
a) préparation d'une suspension aqueuse comprenant de l'eau et un substrat d'avoine ;
b) fractionnement du substrat d'avoine par maintien de la suspension à une température suffisante et traitement de la suspension avec une agitation suffisante, une base suffisante ou un acide suffisant pour ajuster le pH de la suspension aqueuse à l'extérieur du domaine isoélectrique, et une protéase suffisante pour hydrolyser suffisamment de protéines d'avoine, pour obtenir ainsi une suspension translucide qui comprend une fraction solide insoluble, une fraction liquide insoluble, une fraction de protéines d'avoine solubles stables, une fraction de graisses d'avoine solubles et une fraction de glucides d'avoine solubles ;
c) retrait de la fraction liquide insoluble et de la fraction solide insoluble de la suspension pour récupérer ainsi une solution aqueuse stable à faible teneur en graisses transparente finale comprenant de l'eau et une fraction de protéines d'avoine solubles stables, une fraction de graisses d'avoine solubles et une fraction de glucides d'avoine solubles.

2. Procédé selon la revendication 1, caractérisé en ce que la concentration d'avoine dans la suspension est de 1 % à 15 % en masse par rapport à la masse totale de la suspension aqueuse.

3. Procédé selon la revendication 1 ou 2, caractérisé en ce que le substrat d'avoine est réduit en taille par broyage dans un broyeur à marteaux pour former une farine d'avoine, une fine farine d'avoine, une poudre d'avoine, des flocons d'avoine et leurs mélanges.

4. Procédé selon la revendication 3, caractérisé en ce que le substrat d'avoine est réduit en taille pour former une farine d'avoine contenant une fraction fine et dense de particules de forme régulière et une fraction grossière et légère de particules de forme irrégulière, où la fraction fine comprend des protéines d'avoine et des glucides d'avoine et où la fraction fine est récupérée à partir de la fraction grossière et fractionnée.

5. Procédé selon l'une quelconque des revendications 1 à 4, caractérisé en ce que la suspension aqueuse est maintenue à une température dans le domaine de 45°C à 60°C pendant une durée dans le domaine de 60 à 180 min.

6. Procédé selon l'une quelconque des revendications 1 à 5, caractérisé en ce que la suspension aqueuse est rendue basique par addition d'une base choisie dans le coupe comprenant le carbonate de sodium et l'hydroxyde de sodium, et leurs mélanges, et où la suspension aqueuse a un pH dans le domaine d'environ 10 à 12.

7. Procédé selon l'une quelconque des revendications 1 à 6, caractérisé en ce que 0,40 % à 0,60 % en masse d'enzyme protéase, en pourcentage du substrat d'avoine, sont ajoutés à la suspension aqueuse et sont mis à réagir avec les protéines d'avoine disponibles pendant une durée dans le domaine de 60 à 180 min.

8. Procédé selon la revendication 7, caractérisé en ce que la suspension aqueuse comprend de 75 % à 85 % en masse de fraction solide insoluble, de 6 % à 8 % en masse de fraction liquide insoluble, de 10 % à 15 % en masse de protéines d'avoine solubles stables, de 0 % à 1 % en masse de graisses d'avoine solubles et de 3 % à 5 % en masse de glucides d'avoine solubles.

9. Procédé selon l'une quelconque des revendications 1 à 8, caractérisé en ce que la fraction solide insoluble est retirée par centrifugation de la suspension dans une centrifugeuse de décantation actionnée à un minimum de 29 400 m/s² (3 000 G) pendant une durée d'au moins environ 2 min, et la fraction liquide insoluble est ensuite retirée par concentration de la suspension à une concentration en solides d'au moins environ 10 % en masse et chauffage de la suspension à une température d'au moins 40°C et centrifugation de la suspension dans un séparateur liquide/liquide actionné à un minimum de 29 400 m/s² (3 000 G) pendant une durée comprise entre environ 2 et environ 5 min et filtrée dans un élément de microfiltre enroulé en spirale actionné à une pression transmembranaire dans le domaine de 6,9-13,8 kPa (10 à 20 psi).

10. Procédé selon la revendication 9, caractérisé en ce que la solution aqueuse transparente finale comprend de 50 % à 60 % en masse de protéines d'avoine solubles stables, de 0 % à 1 % en masse de graisses d'avoine solubles et de 20 % à 30 % en masse de glucides d'avoine solubles, et contient un maximum de 0,1 % en volume de matière insoluble résiduelle.

11. Procédé selon l'une quelconque des revendications 1 à 10, caractérisé en ce qu'après la séparation d'avec la fraction insoluble, la solution aqueuse contenant des protéines d'avoine solubles transparente finale est stabilisée pour empêcher la croissance de bactéries.

12. Fraction de protéines d'avoine solubles stables préparée par le procédé comprenant :
à) le broyage de gruau d'avoine pour former une farine d'avoine contenant une fraction fine et dense de particules de forme régulière et une fraction grossière et légère de particules de forme irrégulière, où la fraction fine comprend des protéines d'avoine, des glucides d'avoine et des graisses ;
b) la préparation d'une suspension aqueuse comprenant de 8 % à 12 % en masse de la fraction fine de farine d'avoine ;
c) la dissolution de la fraction soluble de la fraction fine de farine d'avoine par chauffage de la suspension aqueuse à une température dans le domaine de 45°C à 60°C en combinaison avec une agitation pendant une durée dans le domaine de 60 min à 180 min, tout en traitant simultanément la suspension aqueuse avec 0,4 % à 1 % en masse, par rapport à la masse de la fine farine d'avoine, d'un mélange d'enzyme protéase, ajoutée de manière séquentielle dans l'ordre respectif, et d'hydroxyde de sodium suffisant pour ajuster le pH initial de la suspension dans le domaine de 10 à 12, pour obtenir ainsi une suspension comprenant de 75 % à 85 % en masse d'une fraction solide insoluble, de 6 % à 8 % en masse d'une fraction liquide insoluble, de 10% à 15 % en masse d'une fraction de protéines d'avoine solubles stables ayant une solubilité minimum de 90 %, de 3 % à 5 % en masse d'une fraction de glucides d'avoine solubles et de 0 % à 1 % en masse d'une fraction de graisses d'avoine solubles ;
d) la centrifugation de la suspension à une force de gravitation minimum d'environ 34 300 m/s² (3 500 G) pendant une durée d'au moins environ 3 min, pour retirer ainsi au moins environ 95 % en masse de la fraction solide insoluble disponible et pour obtenir une suspension aqueuse contenant les fractions d'avoine solubles et la fraction liquide insoluble ,
e) la concentration de la suspension à une concentration d'au moins environ 15 % de solides en masse, et le chauffage et/ou le maintien de la suspension à une température d'au moins 50°C ; et
f) la séparation de la fraction liquide insoluble par séparation sur disques liquide/liquide à une force de gravitation d'au moins 34 300 m/s² (3 500 G) pendant une durée dans le domaine d'environ 2 à 3 min, suivie par une microfiltration dans un élément de microfiltre enroulé en spirale actionné à une pression transmembranaire dans le domaine de 6,9-13,8 kPa (10 à 20 psi) pour récupérer ainsi une solution aqueuse transparente comprenant de l'eau, de 50 % à 60% en masse de fraction de protéines d'avoine solubles stables, de 20 % à 30 % en masse de glucides d'avoine solubles et de 0 % à 1 % en masse de graisses d'avoine solubles, et qui contient un maximum de 0,1 % en volume de matière insoluble résiduelle.

13. Solution aqueuse transparente selon la revendication 12, caractérisée par 50 % à 60 % en masse de protéines d'avoine solubles stables, de 0 % à 1 % en masse de graisses d'avoine solubles et de 20 % à 30 % en masse de glucides d'avoine solubles, et en ce qu'elle contient un maximum de 0,1 % en volume de matière insoluble résiduelle.

14. Mélange solide contenant des protéines d'avoine à faible teneur en graisses sous une forme purifiée caractérisé par de 10 % à 40 % en masse de glucides d'avoine solubles, de 0 % à 3 % en masse de graisses d'avoine solubles et de 30 % a 80 % en masse de protéines d'avoine solubles stables, où ladite fraction a une taille de particules maximum de matière insoluble en solution de 0,2 µm et où ladite fraction donne une solution aqueuse transparente lorsqu'elle est mise en solution dans l'eau.

15. Mélange solide contenant des protéines d'avoine selon la revendication 14, caractérisé en ce que la fraction de protéines d'avoine solubles a une solubilité d'au moins environ 85 %.

16. Mélange solide contenant des protéines d'avoine selon la revendication 15, caractérisé par de 20 % à 30 % en masse de glucides d'avoine solubles, de 0 % à 1 % en masse de graisses d'avoine solubles et de 50 % à 60 % en masse de protéines d'avoine solubles stables où ladite fraction a une taille de particules maximum de matière insoluble en solution de 0,1 µm.
